# EUROPEAN PATENT APPLICATION

(11) **EP 4 429 051 A1**
(43) Date of publication of application: **11.09.2024**
(21) Application number: 23160532.0
(22) Date of filing: 07.03.2023
(51) Int. Cl.: H02G 5/02

(54) **ADJUSTABLE BUSBAR SUPPORT DEVICE, METHOD AND WIND TURBINE GENERATOR**

(71) Applicant: Siemens Gamesa Renewable Energy A/S, 7330 Brande (DK)
(72) Inventor: Djukic, Nenad, 2450 København SV (DK); Yusupov, Alisher, 7100 Vejle (DK)
(74) Representative: SGRE-Association

(57) **Abstract**

Adjustable busbar support device (1) for supporting at least one busbar (2), comprising:
• at least one adjustable busbar support (3) with a receiving section (9) configured to support a busbar (2), wherein a width of the receiving section (9) is adjustable in a width direction (100) of the busbar cross section;
and
• an adjustable frame (4) to support all busbar supports (3), wherein the frame (4) comprises a top plate (5) and a bottom plate (6) extending in the width direction (100), and lateral fastening members (7, 8) extending in a thickness direction (200) and mechanically connecting the top plate (5) and the bottom plate (6),
wherein all busbar supports (3) are mechanically connected to and between the top plate (5) and the bottom plate (6) by means of the fastening members (7, 8), wherein the frame (4) comprises adjustment means to adjust the lateral position of at least one of the fastening members (8) and therewith the width of the receiving section (9) of all busbar supports (3) .

## Description

The present invention relates to an adjustable busbar support device for supporting at least one busbar, to a method of assembling and mounting a respective adjustable busbar support device to a mounting surface and to a wind turbine generator comprising a plurality of respective adjustable busbar support devices.

Busbars are conventionally employed for conducting high currents, and they are typically comprised of a bar or a strip of metal, such as copper. Busbars are employed for transporting and/or distributing large amounts of electrical power. An exemplary application is a wind turbine generator, wherein the busbar may be connected to the stator of the generator to transport electrical power away from the generator.

The busbars must be positioned having a specific distance to each other, depending on the voltage level, cooling system, their size and the space provided for their installation. Therefore, existing solutions employ fixed size blocks, which are assembled to carry and support the busbars. The blocks are generally configured to the size of the busbar, in particular to their width (designating the larger dimension perpendicular to the elongation of the busbar, that is, the larger dimension regarding their cross section) and their thickness (designating the shorter dimension).

A frame is used to hold and carry the busbar supports described above. The busbar supports and the frame may be fixed to a structure with bolts.

The busbars, as well as the busbar supports and the frame suffer from tolerances, so that gaps in width direction or thickness direction may develop. Additionally, if the busbar is too wide (width direction), it will not be possible to assemble the busbar support. Moreover, devices, such as generators, may include different sized busbars and may thus require a corresponding number of differently sized busbar supports. A new type of generator might have a busbar size that depends on the current value and is unique for that specific generator. Accordingly, busbar supports and frames are generally newly designed for each new generator type. Manufacturers thus need to keep several different sizes of busbar supports and/or frames in stock, and might need to adapt the size of the supports for each new generator type. This results in additional design and manufacturing costs, as for example new modules must be made. Moreover, shape and assembly of known solutions are often complicated. Hence, the conventional way of supporting busbars, in particular in wind turbine generators, suffers from several drawbacks.

In prior art application EP 22179900.0, which is not yet laid open, an adjustable busbar support for a single busbar has been proposed, which uses engagement structures of multiple elements to allow a variation of the size of a spacing between the elements in width and in thickness direction.

It is an object of the current invention to mitigate at least some of the drawbacks mentioned above and to provide an improved busbar support device.

This object is achieved by providing a busbar support device, a method and a wind turbine generator according to the independent claims. Advantageous embodiments of the invention are described in the dependent claims.

According to the invention, an adjustable busbar support device for supporting at least one busbar is provided. The adjustable busbar support device comprises at least one adjustable busbar support with a receiving section configured to support a busbar, wherein a width of the receiving section is adjustable in a width direction of the busbar cross section.

The adjustable busbar support device further comprises an adjustable frame to support all busbar supports, wherein the frame comprises a top plate and a bottom plate extending in the width direction, and lateral fastening members extending in a thickness direction and mechanically connecting the top plate and the bottom plate. All busbar supports are mechanically connected to and between the top plate and the bottom plate by means of the fastening members. The frame further comprises adjustment means to adjust the lateral position of at least one of the fastening members and therewith the width of the receiving section of all busbar supports.

By means of such an adjustable busbar support device the size of the one or more receiving sections for receiving the busbars can be adjusted in width direction. The distance between two adjacent busbar supports and/or a busbar support and the top plate or the bottom plate of the frame can additionally be adjusted in thickness direction. Therefore, the busbar support device of the embodiment can be adjusted to different busbar widths and busbar thicknesses. This allows compensation of tolerances during the assembling process and further improves reusability of the same busbar support device for supporting different sized busbars.

The busbar is a flat busbar with a rectangular cross section. In this description, the width direction refers to the width of the busbar, which is defined as the larger dimension of the busbar cross section, that is, perpendicular to the elongation of the busbar. The thickness direction refers to the thickness of the busbar, which is defined as the smaller dimension of the cross section of the busbar. In a preferred embodiment, the width direction is at least substantially orthogonal to the thickness direction. It should, however, be noted that the width direction and/or thickness direction can also be provided at an angle to the width or thickness of the busbar while still allowing a respective adjustability.

With the mechanical connection between the busbar support and the fastening members, and thus coupling at the respective lateral side, mutual adjustment of the fastening members and the receiving section is achieved. By moving the fastening members in width direction relative to each other, the dimension of the receiving section of the busbar support in width direction can be decreased and increased.

The adjustable busbar support device may comprise several busbar supports, preferably one busbar support for each busbar being supported. Additionally, the busbar support device may comprise two fastening members, positioned laterally at the busbar supports in width direction. In an alternative embodiment, the busbar support device may comprise two or more fastening members positioned laterally at the busbar supports in width direction.

Each busbar support preferably comprises two guiding means, in particular through holes, wherein each of the guiding means is configured to accommodate one of the fastening members. The guiding means may be configured to allow smooth adjustment of the busbar support in thickness direction, respectively along a longitudinal axis of the elongate fastening members, when not fastened.

By providing the adjustment means allowing simultaneous, mutual adjustment of the fastening member and all busbar supports in the width direction, comfortable and precise adjustment is provided. The busbar supports are all mechanically coupled to the fastening members, in particular by the guiding means, such that movement of the fastening member, enabled by the adjustment means, results in respective, similar movement at one lateral side of the busbar supports, resulting in adjustment of the receiving section in width direction.

Providing the frame and the general coupling of the width adjustment options of all busbar supports leads to robustness and improved strength of the busbar support device, while still having a simple construction. The adjustment means and coupling of the busbar supports by the fastening members also provides simplicity regarding the width adjustment. The busbar support device can be provided at a low cost. The adjustable busbar support device can be used for different sizes of busbars due to providing adjustability in the width and in the thickness direction, the latter in particular by providing fastening members of different length.

All busbar supports may be arranged in a stacked manner between the top plate and the bottom plate in the thickness direction. This results in the busbars being positioned parallelly to each other, stacked in the same manner as the busbar supports. With such an arrangement, assembly of the busbar support device can be improved, as the busbar supports and the busbars can successively be put together while being supported by the fastening members of the frame.

In a preferred embodiment each busbar support comprises, to facilitate the width adjustment, two busbar support elements movable relative to each other, wherein each fastening member engages one of the busbar support elements. In particular, the busbar support device comprises two fastening members and one or more busbar supports, wherein each of the busbar supports comprises two busbar support elements movable relative to each other, wherein each fastening member engages one of the busbar support elements of each busbar support. Each of the two busbar supports elements of the busbar support may form a portion of its receiving section. Thus, the busbar support elements of a busbar may complement each other to form the busbar support's receiving section. As a result, movement of the busbar support elements relative to each other in width direction results in an increase or decrease of the receiving section's width.

It is preferred that the fastening members engage the busbar support elements in such way that relative adjustment of the fastening members in the width direction causes relative movement of the busbar support elements and hence adjustment of the width of their receiving section. For example, the adjustable busbar support device may comprise two fastening members, wherein one fastening member is fixed in width direction and in the other fastening member is adjustable relative to the first fastening member in width direction due to the adjustment means. In this case, movement of the adjustable fastening member causes the busbar support elements which are in engagement with the adjustable fastening member to move relative to the first fastening member as well as the busbar support elements which are in engagement with the first fastening member.

Each busbar support element may comprise a first engagement structure, wherein the first engagement structures of both busbar support elements engage to prevent relative movement at least in a longitudinal direction, which is perpendicular to the width direction and the thickness direction of the busbar. Additionally, relative movement in the thickness direction may be prevented by engagement of the first engagement structure. In this manner, relative movement of the two busbar support elements of each busbar support in thickness direction and in the longitudinal direction can be prevented.

The engagement of the first engagement structures of both busbar support elements may be described as a mesh, wherein the engagement structures of both busbar support elements comprise portions which overlap in longitudinal direction and, optionally, also in thickness direction, when in engagement. The first engagement structure may provide an adjustable form-fitting connection between the two busbar support elements in these directions.

The width of the receiving section of each busbar support may be smoothly adjustable within a range of 20 mm to 200 mm, preferably 20 mm to 150 mm, more preferably 50 mm to 125 mm. Alternatively, the first engagement structure may be configured to allow a variation between two, three or more predefined spacings in the width direction, for example 50 mm, 100 mm, and 200 mm.

In particular, busbar supports as described in the initially mentioned, not yet laid-open, patent application EP 22179900.0 may be used. Such busbar supports and their busbar support elements can also be understood as adjustable busbar support blocks, which may hence be combined to provide receiving sections for, in particular multiple, busbars and be robustly and adjustably held in the frame of the busbar support device according to the invention. The disclosure of EP 22179900.0 is herewith included by reference in its entirety, in particular regarding the adjustable busbar supports described.

In a preferred embodiment of the invention the adjustment means of the adjustable frame may comprise an elongate opening in each of the plates, through which the adjustable fastening member fixably extends. This enables movement of the adjustable fastening member along the elongate openings in the width direction.

In some embodiments, the openings may have a "sawtooth" shape to allow to reversibly lock the fastening member extending through the opening at certain positions in width direction.

The adjustable fastening member and one of the openings may engage in a form-fitted manner to prevent a rotational movement of the fastening member. This facilitates fixation of the adjustable fastening member, in particular on the opposite side of the frame.

In a preferred embodiment, the adjustable fastening member comprises a threaded portion at one end and a head at the other end, wherein the head is locked rotationally fixed in the opening of one of the top and bottom plates and a nut is provided on the threaded portion extending from the opening in the other of the top and bottom plates to fixate the adjustable fastening member. Generally speaking, the head may comprise at least one surface, which is linearly extending in the width direction and abuts a linear mating surface of the opening to prevent rotation of the head and hence the fastening member, while still being displaceable in the width direction. Furthermore, the opening may comprise at least one step extending in the width and longitudinal directions, whereon the head rests to be supported in the thickness direction, on the side away from the other plate. In other words, the opening in the one plate may comprise a stepped cross section such that the head rests on the step on the side opposite to the at least one busbar support. If, now, the nut is tightened on the other plate, the resulting force fit fixates the fastening member also in the width direction, as well as in the thickness direction. As a result of the restriction of the rotational movement, a nut may easily be tightened to the threaded portion of the adjustable fastening member.

For example, the head of the fastening member may be hexagonally-shaped to allow linear movement along the mating surface of the opening while preventing rotational movement of the adjustable fastening member, when abutting the mating surface.

It is noted that the adjustable fastening member may be fixated in any form-fitting or force-fitting manner and does not necessarily have to comprise a threaded portion.

The top or bottom plate of the frame may comprise an elongate opening with a mating surface and a shoulder or step, wherein the opening comprises a closed inner end in width direction and an open outer end extending to the surface of the plate in width direction. Hence, the opening may be a recess formed in width direction from the lateral side of the plate. The adjustable fastening member may be slid into the open outer end of the opening, for example when the plate is mounted to a mounting surface, such that the head rests on the step in thickness direction and the linearly extending surface of the head abuts the mating surface of the opening in width direction.

The mentioned stepped cross section may be such that the head rests on the step on the side opposite to the at least one busbar support without protruding from the one plate. This is, in particular, advantageous if the one plate is mounted to the mounting surface, such that no non-flatness occurs and the adjustable fastening member may be inserted into the opening in the one plate even after the one plate has been mounted to the mounting surface.

It is noted that, generally, this and similar embodiments, wherein the adjustable fastening member does not serve to mount the busbar support device to a mounting surface, are particularly advantageous in that the adjustment feature does not impact the mounting, since both functions are separately implemented. In particular, adjustment in the width direction does not influence or change mounting points. In the concrete embodiment described above, the one plate, in particular being the bottom plate, may first be mounted to the mounting surface, whereafter the adjustable fastening member may still be added and used to adjust in the width direction, by sliding the adjustable fastening member with its head resting against the step into the open end of the respective opening.

Generally speaking, the fastening members may be bolts or threaded rods or pins with treads at one or both end portions.

In a preferred embodiment, the at least one busbar support is slidingly guided on the fastening members such that the height of the receiving section, which is provided open at a top side of the busbar support, is adjustable by adjusting the position of the busbar support relative to the top plate or upper adjacent busbar support. The position of each busbar support relative to the top plate or other adjacent busbar support may be adjusted when the fastening members are not tightened. After tightening of the fastening members, all busbar supports and the respective busbars are held by pressure in thickness direction by means of the frame.

The fastening members may be interchangeable, such that different fastening members with different length or dimensions may be used without changing the busbar supports or the plates of the frame. This is advantageous, as the same busbar support device can be used with busbars of different thicknesses. In particular, the adjustable busbar support device may comprise interchangeable fastening members of different lengths.

In an especially preferred embodiment, each busbar support comprises, as a second engagement structure, lateral hollow slide sections protruding at a top or bottom side, wherein each slide section receives a fastening member in its hollow interior and is insertable into a slide recess of the top or bottom plate or upper or lower adjacent busbar support. The slide sections and recesses may preferably allow a smooth variation of spacing in the thickness direction. The spacing between two busbar supports or the busbar support and the top plate or the bottom plate may be smoothly adjustable within a range of 5 mm to 20 mm, preferably 5 mm to 10 mm, in thickness direction. Alternatively, the second engagement structure may be configured to allow variation between two, three, or more predefined spacings in the thickness direction, wherein the height of the receiving section in thickness direction may be adjusted to values comprising, for example, 5 mm, 10 mm, and/or 20 mm.

The second engagement structure may comprise an annular sleeve protruding axially in the thickness direction and/or comprise an annular recess extending axially in the thickness direction. The annular sleeve and/or the annular recess may for example be shaped to allow a form-fitting engagement between the sleeve and the recess. Such engagement may be within tolerances, it may be a loose fit or interference fit. As the annular sleeve in the annular recess may be provided on opposite sides of the busbar support, they may not directly engage each other. However, the annular sleeve may engage an annular recess provided on an annular busbar support which may have the same structure and shape, or vice versa.

The top or bottom plate may also comprise one or more slide sections or recesses to allow engagement of the second engagement structures of the busbar support with the top and/or bottom plate of the frame. For example, a slide section at the top of the uppermost busbar support (referring to the thickness direction) may slide into a slide recess of the top plate which may be designed in such way that the busbar support, or one of its busbar support elements, may still be movable in width direction, in particular at least at the side of the adjustable fastening member.

In other words, at least one of the elongate openings may be designed comprising a slide recess into which the slide section of its upper or lower adjacent busbar support slides, wherein the busbar support is movable in the width direction when engaged in the opening, to provide adjustability of the busbar support in width direction.

In a preferred embodiment, each busbar support comprises two busbar support elements, wherein each of the busbar support elements comprises a first and a second engagement structure to allow adjustment of a width and height of the receiving section of the busbar support, as, for example, described in already mention prior application EP 22179900.0.

Preferably, the adjustable busbar support device further comprises at least two fixating means, preferably bolts, for mounting the bottom plate of the frame to a mounting surface. As well as the fastening members, the fixating means may be interchangeable. Thus, different fixating means with different length may be used to mount the adjustable busbar support device to a mounting surface.

At least one of the fastening members may preferably be configured to additionally mount the bottom plate to the mounting surface. Thus, the fixation of the adjustable busbar support device to the mounting surface is improved, as the device is mounted to the mounting surface by means of two fixating means and one fastening member. The other fastening member may still be adjustable at least in width direction when not fixated.

In other words, in a preferred embodiment, the busbar support device comprises two fastening members, wherein one of the fastening members is adjustable in the width direction and the other fastening member, in particular a bolt, is configured to be driven into the mounting surface. Therefore, the fastening member driven into the mounting surface fixates the device to the mounting surface and is fixed in width direction, wherein the other fastening member is adjustable in width direction to mutually adjust the width of the receiving sections of the busbar supports. Hence, the functions of mounting and width adjustment are split and hence independent as already mentioned above, such that, in particular, adjustment to a different width or height does not lead to any changes regarding mounting the busbar support device to the mounting surface.

In the case where the cross section of the opening in one of the two plates, as previously described, comprises a stepped cross section, a head of the adjustable fastening member may rest on this step on the side opposite to the at least one busbar support without protruding from the plate. Since there is no contact between the mounting surface and the head of the adjustable fastening member, its lateral position can still be adjusted in longitudinal direction of the opening, when the device is mounted to the mounting surface.

The top plate and the bottom plate may be made from metal, in particular steel, or EPG (enhanced protective glass) or HGW (German: Hartgewebe) or resin, in particular fiber reinforced resin.

The busbar supports may be made of molded material and/or be made of electrically isolating material, in particular glass fibers in epoxy resin. If the busbar supports are not made from electrically isolating material, isolating elements may be provided between the one or more busbars and their respective receiving section of the one or more busbar supports and/or top plate and/or bottom plate. The insulation may be provided in the form of rubber bands between the busbars and the frame to prevent electrical connection.

According to a further embodiment of the invention, a method of assembling and mounting an adjustable busbar support device according to the invention to a mounting surface is provided. The method comprises providing an equal number of busbars and busbar supports as well as a frame for supporting the busbar supports. Thereafter the bottom plate of the frame is mounted to the mounting surface by means of fixating means. Then the busbar supports, the busbars and the top plate of the frame are attached to the mounted bottom plate by means of at least one of the fastening members. Thereafter, the width of the one or more busbar support receiving sections is adjusted to the width of the one or more busbars by adjusting the at least one adjustable fastening member in the width direction. Finally, the fastening members are tightened to simultaneously adjust the height of the one or more receiving sections to the thickness of the one or more busbars and fixate the one or more busbars and the one or more busbar supports in the width and the thickness direction.

The method may be employed with the adjustable busbar support device having any of the configurations described herein. The above outlined advantages may also be achieved by the method according to the invention.

According to a further embodiment of the invention, a wind turbine generator is provided. The wind turbine generator comprises a plurality of adjustable busbar support devices according to the invention and a plurality of busbars, wherein the busbars are mounted to the generator by means of the adjustable busbar support device.

The wind turbine generator may comprise adjustable busbar support devices having any of the configurations described herein. The above outlined advantages may be also achieved in a wind turbine generator according to the invention.

It is to be understood that the features mentioned above and yet to be explained below can be used not only in the respective combinations indicated, but also in other combinations or in isolation, without leaving the scope of the present invention. In particular, the features of the different aspects and embodiments of the invention can be combined with each other unless noted to the contrary.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a schematic drawing showing an adjustable busbar support device according to an embodiment,
- Fig. 2: a schematic drawing of the left side of an embodiment of an adjustable busbar support device,
- Fig. 3: a schematic section view (front view) of the adjustable busbar support device of fig. 2,
- Fig. 4: a schematic drawing illustrating a method of assembling and mounting an adjustable busbar support device to a mounting surface, and
- Fig. 5: a schematic drawing illustrating a wind turbine with a wind turbine generator comprising a plurality of adjustable busbar support devices and a plurality of busbars.

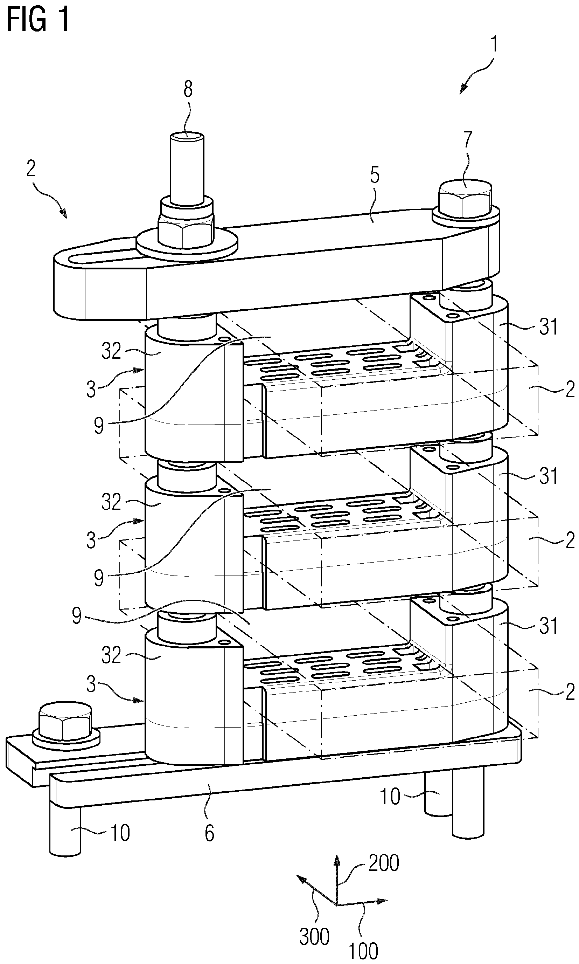

Fig. 1 schematically shows an example of an adjustable busbar support device 1 according to the invention. The adjustable busbar support device 1 is designed to support three busbars 2 (shown dashed). Therefore, the adjustable busbar support device 1 comprises three busbar supports 3, which are supported by means of a frame 4, comprising a top plate 5 and a bottom plate 6 as well as two lateral fastening members 7, 8.

For better understanding, a coordinate system shows the three directions (width direction 100, thickness direction 200 and longitudinal direction 300) already used in the aforementioned description. The width direction 100 of the adjustable busbar support device 1 is orthogonal to the thickness direction 200 and the longitudinal direction 300. Also, the width direction 100 of the adjustable busbar support device 1 is equivalent to a width of the busbars 2 and the thickness direction 200 of the adjustable busbar support device 1 is equivalent to the thickness of the busbars 2. The thickness direction 200 may also be understood as a height direction, as the thickness of the busbars 2 may also be understood as their height. The longitudinal direction 300 of the adjustable busbar support device 1 is also the (at least local) longitudinal direction of the busbars 2.

Each busbar support 3 provides a receiving section 9 for receiving one of the busbars 2, wherein the width of all receiving sections 9 is adjustable in width direction 100.

Each busbar support 3 comprises two busbar support elements 31, 32 which are movable relative to each other in width direction 100. As the adjustable fastening member 8 is mechanically coupled to one of the busbar support elements 32 and supported by the top plate 5 and the bottom plate 6, the busbar support elements 32 move in accordance to an adjustment of the adjustable fastening member 8 in width direction 100. This results in a change of width of the receiving section 9.

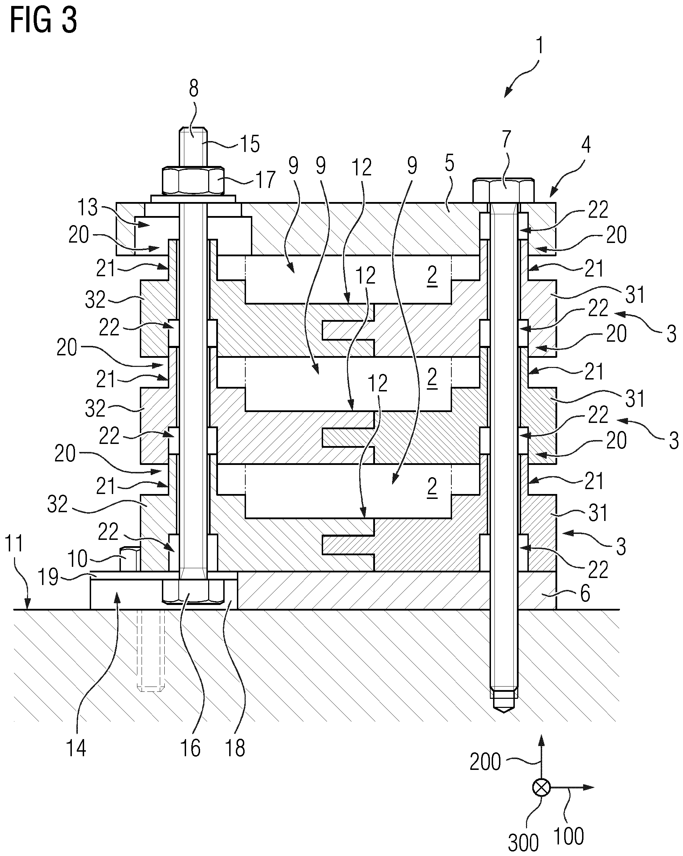

The size of the receiving sections 9 is further adjustable in thickness direction 200. This means, one adjustable busbar support device 1 can support busbars 2 of different widths and thicknesses. The width and height adjustment will later be described in more detail with reference to fig. 3.

The two fastening members 7, 8 mechanically connect the top plate 5 and the bottom plate 6 as well as the three busbar supports 3. By fixating the fastening members 7, 8 a pressure is applied in thickness direction 200, which presses the frame 4, the busbar supports 3 and the busbars 2 together and fixates the adjustable busbar support device 1 and the busbars 2.

As shown in fig. 1, all busbar supports 3, as well as the busbars 2, are arranged in a stacked manner between the top plate 5 and the bottom plate 6 of the frame 4 in thickness direction 200. As a result of the symmetrical arrangement, only two fastening members 7, 8 are needed to fixate the busbars 2 to the frame 4. The fastening members 7, 8 are therefore positioned at the lateral end portions of the busbar supports 3.

The device 1 may comprise a varying number of busbar supports 3, depending on the number of busbars 2 being supported. One busbar support 3 provides one receiving section 9, which is formed by the busbar support 3 itself and one adjacent busbar support 3 or the top plate 5 of the frame 4.

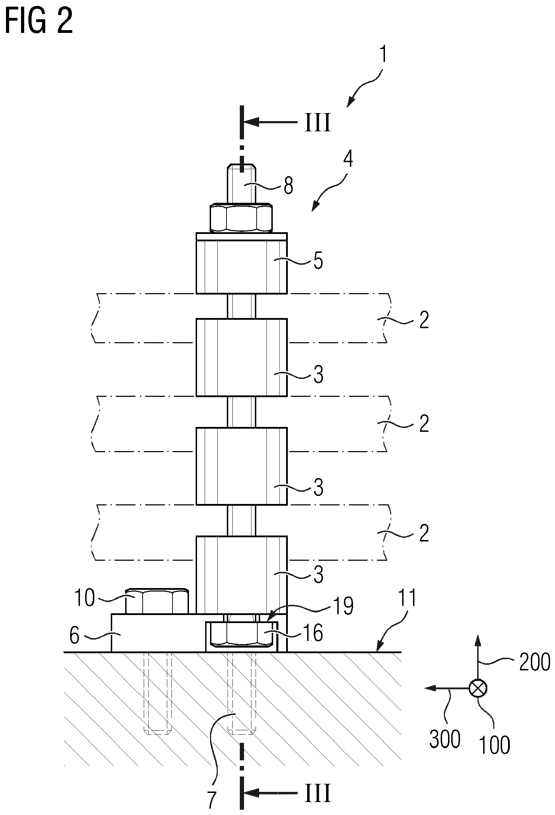

The device 1 further comprises two fixating means 10 for mounting the bottom plate 6 to a mounting surface (see fig. 2 or 3). The fixating means 10 are preferably bolts. It is noted that the adjustable busbar support device 1 may comprise more than two fixating means 10, depending on its size and weight, as well as the amount of busbars 2 being supported.

Fig. 2 shows a schematical side view of the adjustable busbar support device 1 of fig. 1 from the left side. The adjustable busbar support device 1 is mounted to a mounting surface 11 by means of the two fixating means 10 as well as one of the fastening members 7. The bottom plate 6 is mounted to the mounting surface 11 using the fixating means 10. However, the fastening member 7 is also configured to additionally mount the bottom plate 6 to the mounting surface 11.

The second fastening member 8, which is adjustable in width direction 100, does not contact the mounting surface 11 and serves no mounting function. Thus, the adjustable fastening member 8 is not used for mounting the adjustable busbar support device 1 to the mounting surface 11, but only for fixating the frame 4 to the busbars 2 and for adjustment in the width direction 100. The adjustment and the mounting are thus separated or "split".

Fig. 3 shows a schematical sectional view of the adjustable busbar support device 1 of fig. 1 and 2. In the following, the adjustment of the frame 4 in width direction 100 is described in more detail. Each busbar support 3 comprises the two busbar support elements 31, 32, which are movable relative to each other to facilitate the width adjustment. Each of the two fastening members 7, 8 engages one of the busbar support elements 31, 32. Each busbar support element 31, 32 comprises a first engagement structure 12, wherein the first engagement structures 12 of both busbar support elements 31, 32 engage to prevent relative movement in longitudinal direction 300. The first engagement structure 12 further prevents relative movement of the busbar support elements 31, 32 in thickness direction 200. The connection of both busbar support elements 31, 32 by means of the first engagement structure 12 might be described as a mesh with both busbar support elements 31, 32 overlapping each other in an overlapping portion in width direction 100.

The busbar support elements 31 engage the fastening member 7, which is not movable in width direction 100. Therefore, the busbar support elements 31 are fixated to the top plate 5 and the bottom plate 6 of the frame 4 without being movable in width direction 100. The busbar support elements 32, however, engage the adjustable fastening element 8, which is movable and therefore adjustable in width direction 100, when not fixated. This allows all busbar support elements 32 to be moved together with the fastening member 8 in width direction 100, and relative to the busbar support elements 31. The mechanical connection and thus coupling of the adjustable fastening member 8 and the busbar support elements 32 enables mutual adjustment of the adjustable fastening element 8 and the receiving sections 9 of each busbar support 3 in width direction 100. The width of the receiving section 9 is smoothly adjustable within a range of 20 mm to 200 mm. Alternatively, it may be adjustable within a range of 20 mm to 150 mm, more preferably 50 mm to 125 mm. In other embodiments, the first engagement structure 12 may not be designed to be smoothly (slidingly) adjustable, but to allow an adjustment in two or more positions in width direction 100. In this case, the size of the receiving sections 9 might be adjustable to a specific width (referring to width direction 100) of, for example, 20 mm, 50 mm, 100 mm, 150 mm, or 200 mm.

To enable adjustment of the adjustable fastening member 8 in width direction 100, the top plate 5 and the bottom plate 6 of the frame 4 comprise elongate openings 13, 14, through which the adjustable fastening element 8 fixably extends. The opening 14 and the adjustable fastening member 8 are both configured to partly engage in a form-fitted manner to prevent rotational movement of the fastening member 8. The movement of the adjustable fastening member 8 in width direction 100, however, is not restricted by means of the form-fitted engagement. To provide such form-fitted engagement, the adjustable fastening member 8 comprises a head 16 opposite a threaded portion 15, wherein the head 16 is locked rotationally fixed in the opening 14 of the bottom plate 6 and a nut 17 is provided on the threaded portion 15 extending from the opening 13 in the top plate 5 to fixate the fastening member 8. The fastening member 8 is a bolt with a threaded portion 15 and a hexagonally shaped head 16. The head 16 comprises a surface, which is linearly extending in the width direction 100 and abuts a linear mating surface 18 of the opening 14 to prevent rotation of the head 16 and hence the fastening member 8, while still being displaceable in the width direction 100. If, however, the nut 17 is tightened on the top plate 5, the force-fit fixates the adjustable fastening member 8 in width direction 100 as well as in the thickness direction 200. A cross section of the opening 14 in the bottom plate 6 comprises a step 19, which can be seen in fig. 2, such that the head 16 of the fastening member 8 rests on the step 19 on the side opposite to the busbar supports 3 without protruding from the bottom plate 6. This way, the adjustment, respectively the sliding movement, of the fastening member 8 in width direction 100 is not restricted when the adjustable busbar support device 1 is mounted to the mounting surface 11, since there is no contact between the head 16 of the fastening member 8 and the mounting surface 11. Furthermore, mounting is not impeded.

One side of the opening 14 extends to the edge of the bottom plate 6 in width direction 100. As a result, even after the adjustable busbar support device 1 is mounted to the mounting surface 11, the adjustable fastening member 8 and its head 16 can be slid into the opening 14. Thus, the installation of the adjustable fastening member 8 can take place after mounting the adjustable busbar support device 1 to the mounting surface 11.

It is noted that the openings 13 and 14 might as well be provided in the other of the top plate 5 or bottom plate 6. Thus, the fastening member 8 might be turned around and the head 16 of the fastening member 8 might rest on the top plate 5, wherein the nut 17 is positioned in the opening 14 of the bottom plate 6. In this case, the opening 14 needs to be designed in such way that the nut 17 can be tightened when the adjustable busbar support device 1 is mounted to the mounting surface 11 and the fastening member 8 as well as the nut 17 do not contact the mounting surface 11.

To allow adjustment in thickness direction 200, the busbar supports 3, in fact the busbar support elements 31, 32, are slidingly guided on the fastening members 7, 8 such that the height of the receiving sections 9 in thickness direction 200 is adjustable by adjusting the position of each busbar support 3 relative to the top plate 5 or the upper adjacent busbar support 3 along the fastening members 7, 8. To support the height adjustment each busbar support 3 comprises a second engagement structure 20, which comprises a lateral hollow slide section 21 and a lateral hollow slide recess 22. The slide sections 21 on the top of each busbar support 3 and the slide recesses 22 are on the bottom of each busbar support 3. These slide sections 21 as well as the slide recesses 22 are annularly shaped, wherein the slide sections 21 are insertable into the slide recesses 22 of the respective adjacent busbar support 3.

The cross section of the opening 13 in width direction 100 and thickness direction 200 is designed such that the slide section 21 of the uppermost busbar support 3 (in thickness direction 200) does not restrict movement of the fastening member 8 in width direction 100.

The height of the receiving sections 9 is adjustable when the fastening members 7, 8 are not fixated. The fastening members 7, 8 are interchangeable with another pairs of fastening members, which are longer or shorter (in thickness direction 200) to increase or decrease the range of adjustment in thickness direction 200. The adjustable busbar support device 1 may comprise interchangeable pairs of fastening members 7, 8 of different lengths. Generally, also regarding the pairs themselves, the fastening members 7 and 8 do not have to be identical, in particular in length.

The slide sections 21 and slide recesses 22 do not have to be annularly shaped, however, this is preferred. They may also be rectangular shaped or oval shaped.

Depending on the material of the busbar supports 3 and/or the top plate 5 or bottom plate 6 of the frame 4, an insulation (not shown) may be provided to prevent current flow from one busbar 2 to another busbar 2 or from one busbar 2 to the mounting surface 11. Therefore, insulating material, like rubber or polymer or resin, may be provided in areas of direct contact between the busbar supports 3 and the busbars 2.

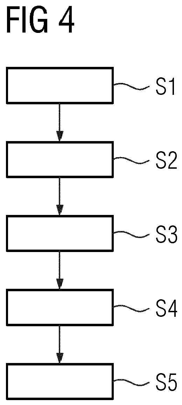

Fig. 4 shows a schematical flow chart of a method of assembling and mounting an adjustable busbar support device 1 (see figures 1 to 3 comprising the steps S1 to S5). The method is described below with reference to fig. 3.

In the first step S1 an equal number of busbars 2 and busbar supports 3 as well as the frame 4 for supporting the busbar supports 3 are provided. As the receiving sections 9 for receiving the busbars 2 are formed by either two adjacent busbar supports 3 or one busbar support 3 and a top plate 5 or bottom plate 6 of the frame 4, it is preferred to provide an equal number of busbar supports 3 and busbars 2.

In the second step S2 the bottom plate 6 of the frame 4 is mounted to the mounting surface 11 by means of the fixating means 10 depending on the size of the adjustable busbar support device 1 two or more fixating means 10 might be used.

After mounting the bottom plate 6 to the mounting surface 11 the busbar supports 3, the busbars 2 and the top plate 5 of the frame 4 get attached to the mounted bottom plate 6 by means of the fastening members 7, 8. At first, the adjustable fastening member 8 gets slid into the opening 14 and the first busbar support 3 gets slid onto the fastening member 8. Then, the first busbar 2 is put into the receiving section 9 of the first busbar support 3 and the second busbar support 3 is put on top of the first busbar support 3 and the first busbar 2, wherein the slide sections 21 of the first busbar support 3 slide into the slide recesses 22 of the second busbar support 3. This is repeated until all busbars 2 are supported by the busbar supports 3 and the top plate 5 of the frame 4 gets attached. After all busbar supports 3 and busbars 2 are stacked onto each other, the fastening member 7 is put through the hollow interior of the slide sections 21 and slight recesses 22 and is driven into the mounting surface 11.

As the fastening member 8 is still not fixated, in step S4 the width of the busbar supports' 3 receiving sections 9 is adjusted by adjusting the fastening member 8 in the width direction 100.

After the receiving sections 9 have been adjusted to the width of the busbars 2, the fastening members 7, 8 are tightened to simultaneously adjust the height of the receiving sections 9 to the thickness of the busbars 2 and fixate the busbars 2 and the busbar supports 3 in width direction 100 and in thickness direction 200. As a result of the form-fit of the head 16 of the fastening member 8 and the opening 14, the fastening member 8 can easily be fixated by tightening the nut 17.

The above-described method, however, is only one way of mounting and adjusting the device 1 to a mounting surface. The adjustable busbar support device 1 and the busbars 2 may as well be preassembled and be mounted to the mounting surface 11 later on. In this case, the busbars 2, as well as the busbar supports 3 and the frame 4 of the adjustable busbar support device 1 are provided in a first step. In a second step the adjustable fastening member 8 is put in the opening 14 of the bottom plate 6 of the frame 4 and the busbar supports 3, while the busbars 2 are slidingly attached to the fastening member 8 in the same manner as described in the method above. After all busbar supports 3 and busbars 2 are stacked onto each other in thickness direction 200, the top plate 5 of the frame 4 is attached to the uppermost busbar 2 and busbar support 3 by sliding the sliding recesses 22 of the top plate 5 onto the slide sections 21 of the uppermost busbar support 3. After that, the fastening member 7 is put through the hollow interior of the slide sections 21 and slight recesses 22 of the busbar supports 3 as well as the respective opening in the bottom plate 6 of the frame 4.

In a third step, the width of the receiving sections 9 of the busbar supports 3 is adjusted to the width of the busbars 2 by slidingly adjusting the position of the fastening member 8 in width direction 100. After the width of the receiving sections 9 has been adjusted, the height of the receiving sections 9 gets adjusted by fixating the busbars 2 and the busbar supports 3 as well as the top plate 5 and the bottom plate 6 by tightening the nut 17 and the fastening member 8. In this state, the adjustable busbar support device 1 and the busbars 2 are not fully fixated as the fastening member 7 is only put through the busbar supports 3 and the plates 5, 6 of the frame 4. Therefore, handling the preassembled adjustable busbar support device 1 with the busbars 2 needs to be done with caution.

In a last step, the preassembled adjustable busbar support device 1, together with the busbars 2, is mounted to the mounting surface 11 by means of two or more fixating means 10 as well as the fastening member 7, which gets driven into the mounting surface 11. The assembly is then fully fixated in width direction 100 and thickness direction 200 as well as in longitudinal direction 300.

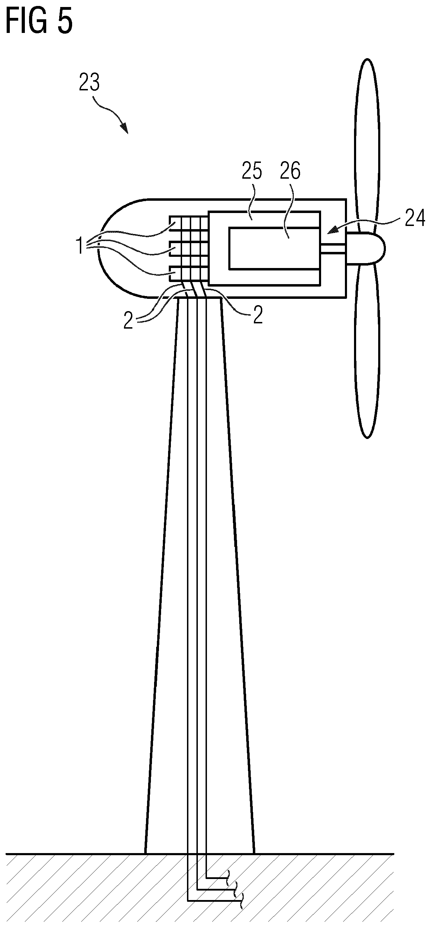

Fig. 5 schematically shows a wind turbine 23 with a wind turbine generator 24. The generator 24 comprises a plurality of busbars 2 and adjustable busbar support devices 1 according to the invention (of which only three are shown). The busbars 2 are mechanically connected to a stator 25 of the generator 24. Held by the adjustable busbar support devices 1, the busbars 2 can then be electrically connected to stator windings and electrical energy can be transferred away from the stator 25 of the generator 24.

The adjustable busbar support devices 1 may alternatively be used to mount the busbars 2 to the rotor 26 of the generator 24.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Adjustable busbar support device (1) for supporting at least one busbar (2), comprising:
• at least one adjustable busbar support (3) with a receiving section (9) configured to support a busbar (2), wherein a width of the receiving section (9) is adjustable in a width direction (100) of the busbar cross section; and
• an adjustable frame (4) to support all busbar supports (3), wherein the frame (4) comprises a top plate (5) and a bottom plate (6) extending in the width direction (100), and lateral fastening members (7, 8) extending in a thickness direction (200) and mechanically connecting the top plate (5) and the bottom plate (6),
wherein all busbar supports (3) are mechanically connected to and between the top plate (5) and the bottom plate (6) by means of the fastening members (7, 8), wherein the frame (4) comprises adjustment means to adjust the lateral position of at least one of the fastening members (8) and therewith the width of the receiving section (9) of all busbar supports (3) .

2. Adjustable busbar support device (1) according to claim 1, wherein the or all busbar supports (3) are arranged in a stacked manner between the top plate (5) and the bottom plate (6) in the thickness direction (200).

3. Adjustable busbar support device (1) according to claim 1 or 2, wherein each busbar support (3) comprises, to facilitate the width adjustment, two busbar support elements (31, 32) movable relative to each other, wherein each fastening member (7, 8) engages one of the busbar support elements (31, 32).

4. Adjustable busbar support device (1) according to claim 3, wherein each busbar support element (31, 32) comprises a first engagement structure (12), wherein the first engagement structures of both busbar support elements (31, 32) engage to prevent relative movement in a longitudinal direction, which is perpendicular to the width direction (100) and the thickness direction (200), of the busbar (2).

5. Adjustable busbar support device (1) according any of the preceding claims, wherein the adjustment means comprises an elongate opening (13, 14) in each of the plates (5, 6), through which the adjustable fastening member (8) fixably extends.

6. Adjustable busbar support device (1) according to claim 5, wherein the adjustable fastening member (8) and one of the openings (14) engage in a form-fitted manner to prevent a rotational movement of the fastening member (8).

7. Adjustable busbar support device (1) according to claim 5 or 6, wherein the adjustable fastening member (8) comprises a threaded portion (15) at one end and a head (16) at the other end, wherein the head (16) is locked rotationally fixed in the opening (14) of one of the top and bottom plates (5, 6) and a nut (17) is provided on the threaded portion (15) extending from the opening (13) in the other of the top and bottom plates (5, 6) to fixate the adjustable fastening member (8).

8. Adjustable busbar support device (1) according to claim 7, wherein the cross section of the opening (14) in the one plate (6) comprises a stepped cross section such that the head (16) rests on the step (19) on the side opposite the at least one busbar support (3) without protruding from the one plate (6).

9. Adjustable busbar support device (1) according to any of the preceding claims, wherein the at least one busbar support (3) is slidingly guided on the fastening members (7, 8) such that the height of the receiving section (9), which is provided open at a top side of the busbar support (3), is adjustable by adjusting the position of the busbar support (3) relative to the top plate (5) or upper adjacent busbar support (3).

10. Adjustable busbar support device (1) according to claim 9, wherein each busbar support (3) comprises, as a second engagement structure (20), lateral hollow slide sections (21) protruding at a top or bottom side, wherein each slide section (21) receives a fastening member (7, 8) in its hollow interior and is insertable into a slide recess (22) of the top or bottom plate (5, 6) or upper or lower adjacent busbar support (3).

11. Adjustable busbar support device (1) according to any of the preceding claims, wherein the busbar support device (1) further comprises at least two fixating means (10), preferably bolts, for mounting the bottom plate (6) of the frame (4) to a mounting surface (11).

12. Adjustable busbar support device (1) according to claim 11, wherein at least one of the fastening members (7, 8) is configured to additionally mount the bottom plate (5) to the mounting surface (11).

13. Adjustable busbar support device according (1) to claim 11 or 12, wherein the busbar support device (1) comprises two fastening members (7, 8), wherein one of the fastening members (8) is adjustable in the width direction (100) and the other fastening member (7), in particular a bolt, is configured to be driven into the mounting surface (11).

14. Method of assembling and mounting an adjustable busbar support device (1) according to any of the preceding claims to a mounting surface:
• providing an equal number of busbars (2) and busbar supports (3) as well as a frame (4) for supporting the busbar supports (3);
• mounting the bottom plate (6) of the frame (4) to the mounting surface (11) by means of fixating means (10);
• attaching the busbar supports (3), the busbars (2) and the top plate (5) of the frame (4) to the mounted bottom plate (6) by means of at least one of the fastening members (7, 8);
• adjusting the width of the busbar supports (3) receiving sections (9) to the width of the busbars (2) by adjusting the at least one adjustable fastening member (8) in the width direction (100); and
• tightening the fastening members (7, 8) to simultaneously adjust the height of the receiving sections (9) to the thickness of the busbars (2) and fixate the busbars (2) and the busbar supports (3) in the width (100) and the thickness direction (200).

15. Wind turbine generator (24) comprising a plurality of adjustable busbar support devices (1) according to one of the claims 1 to 13 and a plurality of busbars (2), wherein the busbars (2) are mounted to the generator (24) by means of the adjustable busbar support devices (1).
